# EUROPÄISCHE PATENTSCHRIFT

(11) **EP 4 118 330 B1**
(45) Veröffentlichungstag und Bekanntmachung des Hinweises auf die Patenterteilung: **02.07.2025**
(21) Anmeldenummer: 21715475.6
(22) Anmeldetag: 08.03.2021
(51) Int. Cl.: F03D 13/10, B66C 23/18, B66C 23/20, F03D 13/20

(54) **VERFAHREN ZUM ERRICHTEN EINER WINDENERGIEANLAGE**
METHOD FOR ERECTING A WIND POWER PLANT
PROCÉDÉ D'ÉRECTION D'UNE CENTRALE ÉOLIENNE

(30) Priorität: 10.03.2020 DE 102020203032
(43) Veröffentlichungstag der Anmeldung: 18.01.2023
(73) Patentinhaber: thyssenkrupp Carbon2Chem GmbH, 45143 Essen (DE)
(72) Erfinder: KOTTKAMP, Klaus, 47167 Duisburg (DE); QAIMI, Siear, 42489 Wülfrath (DE); PATBERG, Lothar, 47445 Moers (DE)
(74) Vertreter: thyssenkrupp Intellectual Property GmbH
(86) Internationale Anmeldenummer: PCT/DE2021/100229
(87) Internationale Veröffentlichungsnummer: WO 2021/180274

(56) Entgegenhaltungen:
- WO-A1-2012/163906
- DE-A1- 102012 009 785
- DE-A1- 102013 110 495
- DE-A1- 102014 225 336

## Beschreibung

### Technisches Gebiet (Technical Field)

Die Erfindung betrifft ein Verfahren zum Errichten einer Windenergieanlage umfassend einen Turm und einer auf dem Turm drehbar angeordneten Gondel, wobei der Turm eine untere Gitterstruktur, einen Übergang und einen oberen Zylinder umfasst, wobei der Übergang den oberen Zylinder mit der Gitterstruktur verbindet, wobei die Gitterstruktur mindestens drei Eckstiele umfasst, welche in einem Winkel zur Vertikalen der Gitterstruktur zueinander geneigt sind und an ihren unteren Enden zur Vertikalen Eckpunkte definieren, welche eine Grundfläche aufspannen, Querstreben und/oder Diagonalstreben aufweist, wobei zunächst die Gitterstruktur, auf die Gitterstruktur der Übergang, auf dem Übergang der obere Zylinder und auf dem oberen Zylinder die Gondel nacheinander montiert werden, wobei vor dem Errichten der Windenergieanlage zumindest bereichsweise mindestens ein Fundament zur Aufnahme der unteren Enden der Eckstiele erstellt wird.

### Technischer Hintergrund (Background Art)

Bei der Errichtung von Windenergieanlagen stellt die Montage/Installation der Gondel, der Rotorblätter und Turbine eine große Herausforderung dar. Hierbei müssen mehrere hundert Tonnen auf Höhen von mehr als 90 m bzw. in Schwachwindgebieten auf über 130 m gehoben und sicher in Position gehalten werden, bis eine kraftschlüssige Verbindung mit dem Tragwerk (Turm) hergestellt ist. Oft werden hierbei schwere Krane, meist Raupenkrane oder seltener auch Turmdrehkrane verwendet.

Damit die Standsicherheit dieser Krane gewährleistet ist, muss in dem Arbeitsbereich unterhalb der Stell- und Arbeitsfläche des Krans der Boden aufwändig bearbeitet und ertüchtigt werden, beispielsweise durch Bodenaustausch und Bodenverfestigung. Diese sogenannten "crane pads" können Flächen von ca. 1800 m² bis 2500 m² einnehmen und bis mehrere Meter tief sein.

Die Gesamtkosten für einen schweren Kran (Montage, Demontage, Transport) und Bodenarbeiten (crane pad) pro Windenergieanlage sind sehr hoch. Zusätzlich fallen weitere Kosten für die Erschließung der Wege für den schweren Kran zu und zwischen den jeweiligen Errichtungsorten an.

Konzepte, um Kosten durch die Nutzung eines Turmdrehkrans zu verringern, sind bereits erprobt und werden teilweise bereits eingesetzt. Allerdings ist bei den Turmdrehkranen das maximale Hubgewicht nicht ausreichend, um neue Turbinengenerationen mit hoher bzw. höherer Leistung heben zu können.

Somit bleibt als meist verwendete Lösung die Nutzung eines Raupenkrans, welche für Nabenhöhen bis zu 100 m vielfältig verfügbar sind, für Nabenhöhen über 120 m seltener und mit den zuvor genannten extrem hohen Zusatzkosten verbunden sind, was sich bei den sinkenden Vergütungen für die Einspeisung der gewonnenen Energie nachteilig auf die Wirtschaftlichkeit auswirken kann.

Die Errichtung von Hybridtürmen für Windenergieanlagen mit einer Gitterstruktur im unteren Teil und einem Zylinder im oberen Teil erfordern einen Übergang, welcher als Verbindung zwischen Gitterstruktur und Zylinder eine homogene Lastenverteilung vornimmt, insbesondere um alle dynamischen und extremen Lasten des oberhalb platzierten Zylinders auf die untere Gitterstruktur und auf das Fundament homogen zu übertragen. Beispielhaft beschreibt die Offenlegungsschrift DE 10 2013 110 495 A1 einen gattungsgemäßen Hybridturm.

Die Verwendung von Turmdrehkranen zur Errichtung von Windenergieanlagen ist beispielhaft in der Patentschrift EP 2 715 115 B1 oder DE 10 2012 009785 A1 beschrieben.

Für die Errichtung einer Windenergieanlage, welche einen Hybridturm aufweist, besteht Optimierungspotential, insbesondere um hohe Türme mit großen Nabenhöhen wirtschaftlich realisieren zu können.

### Zusammenfassung der Erfindung (Summary of Invention)

Der Erfindung liegt somit die Aufgabe zu Grunde, ein Verfahren zum Errichten einer Windenergieanlage bereitzustellen, mit welchem Windenergieanlagen, insbesondere mit großen Nabenhöhen, wirtschaftlich herstellbar sind.

Gelöst wird diese Aufgabe durch ein Verfahren mit den Merkmalen des Patentanspruchs 1. Erfindungsgemäß wird zum Errichten der Windenergieanlage ein Turmdrehkran bereitgestellt wird, welcher innerhalb des durch die Eckpunkte der Eckstiele aufgespannten Grundfläche positioniert und aufgebaut wird.

Die Erfindung stellt ein wirtschaftliches Verfahren zum Errichten einer Windenergieanlage, insbesondere mit großer Nabenhöhe bereit. Unter Nabenhöhe ist die Nabe des Windrotors der Windenergieanlage über der Geländeoberfläche (Aufstellungsort) zu verstehen.

Die zu errichtende Windenergieanlage umfasst einen Turm und eine auf dem Turm drehbar angeordnete Gondel. In der Gondel sind beispielswiese ein Generator und weitere mechanische und elektrische Komponenten untergebracht. Nach außen verläuft eine Nabe, auf welcher Rotorblätter angeordnet werden. Der Turm umfasst eine untere Gitterstruktur, einen Übergang und einen oberen Zylinder, wobei der Übergang den oberen Zylinder mit der Gitterstruktur verbindet. Die Gitterstruktur weist mindestens drei Eckstiele, welche in einem Winkel zur Vertikalen der Gitterstruktur zueinander geneigt sind und an ihren unteren Enden zur Vertikalen Eckpunkte definieren, welche eine Grundfläche aufspannen, Querstreben und/oder Diagonalstreben auf. Die Eckstiele sind derart zueinander geneigt, dass sie im unteren Abschnitt der Gitterstruktur weiter voneinander beabstandet sind als im oberen Abschnitt der Gitterstruktur.

Die untere Gitterstruktur des Turms einer Windenergieanlage kann aus mehreren Längscstreben zusammengesetzt sein, welche die jeweiligen Eckstiele bilden. Die Querstreben können in einer Ebene in der Horizontalen der Gitterstruktur jeweils zwischen den Eckstielen verlaufen. Die Diagonalstreben können insbesondere zwischen zwei jeweils voneinander beabstandeten Ebenen in der Horizontalen der Gitterstruktur jeweils zwischen den Eckstielen verlaufen. Die Längsstreben, Querstreben und Diagonalstreben können aus Profilen gebildet sein, entweder jeweils aus einem Hohlprofil oder aus einem Vollmaterial oder einer Kombination daraus bestehen. Der Querschnitt der Profile kann individuell ausgebildet sein. Die Längsstrebe hat insbesondere einen größeren Durchmesser im Vergleich zur Querstrebe und/oder Diagonalstrebe. Wird ein Hohlprofil verwendet, ist es beispielsweise ein längs- oder ein spiralnahtgeschweißtes Rohr. Besonders bevorzugt weisen Längsstrebe, Querstrebe und/oder Diagonalstrebe einen kreisrunden Querschnitt auf. Weiter bevorzugt können die Profile standardisierte Profile sein, die kostengünstig herstellbar sind und dadurch je nach Ausgestaltung der Gitterstruktur individuell auf die gewünschte Länge zuschneidbar sind. Mindestens zwei oder mehrere in Längserstreckung zusammengesetzte Längsstreben bilden jeweils ein Eckstiel, wobei die Gitterstruktur mindestens drei Eckstiele umfasst. Die Quer- und/oder Diagonalstreben verlaufen jeweils zwischen den Eckstielen und sind mit diesen verbunden, entweder jeweils auf einer Ebene (Querstrebe) oder jeweils zwischen zwei Ebenen (Diagonalstrebe) an einer erstellten Gitterstruktur respektive an einem erstellten Turm. Die Anbindung bzw. Verbindung zwischen den einzelnen Längsstreben, der Diagonal- und/oder Querstreben kann über Knoten erfolgen. Die Gitterstruktur kann genau drei Eckstiele aber auch mehr als drei Eckstiele aufweisen, beispielsweise vier, fünf, sechs, sieben oder acht, oder mehr als acht.

Zunächst wird die Gitterstruktur montiert. Diese kann aus mehreren Teilen (Längsstreben, Querstreben, Diagonalstreben, Knoten) entweder "liegend" zusammengebaut und anschließend, insbesondere mittels des bereitgestellten Turmdrehkrans aufgerichtet, werden oder "stehend" in die Höhe, insbesondere unter Verwendung des bereitgestellten Turmdrehkrans, aufgebaut werden, oder eine Kombination aus "liegender" und "stehender" Montage unter Verwendung des bereitgestellten Turmdrehkrans.

Vor dem Errichten der Windenergieanlage, insbesondere vor dem Errichten der Gitterstruktur, wird zumindest bereichsweise mindestens ein Fundament zur Aufnahme der unteren Enden der Eckstiele erstellt. Das Fundament kann entweder (nur) lokal in den Bereichen der Aufnahme der unteren Enden der Eckstiele erstellt werden, wobei die lokalen Bereiche nicht miteinander verbunden sind, oder alternativ ein Fundament erstellt werden, welches nicht nur die Bereiche zur Aufnahme der unteren Enden der Eckstiele sondern auch die aufgespannte Grundfläche zwischen den Eckpunkten umfasst und somit eine Verbindung der Eckpunkte über das Fundament ermöglicht. Am unteren Ende der Gitterstruktur respektive an den unteren Enden der Eckstiele der Gitterstruktur steht ein Fundament oder mehrere lokale Fundamente, somit zumindest bereichsweise mindestens ein Fundament bereit, welches insbesondere Mittel aufweist, die zur Aufnahme und/oder Anbindung des unteren Endes der Gitterstruktur respektive der unteren Enden der Eckstiele der Gitterstruktur dienen.

Auf die Gitterstruktur wird der Übergang montiert und befestigt. Dieser kann aus einzelnen Teilen oder als Ganzes insbesondere mittels des bereitgestellten Turmdrehkrans gehoben werden. Des Weiteren wird der obere Zylinder, welcher beispielsweise in Längserstreckung aus mehreren zylindrischen Segmenten zusammengesetzt sein kann, insbesondere mittels des bereitgestellten Turmdrehkrans gehoben und anschließend auf dem Übergang montiert und befestigt. Anschließend wird die drehbar gelagerte Gondel insbesondere mittels des bereitgestellten Turmdrehkrans gehoben und anschließend auf dem oberen Zylinder montiert und befestigt, wobei die Gondel aus Teilen zusammengesetzt sein kann oder als Ganzes auf dem oberen Zylinder angeordnet werden kann.

Da erfindungsgemäß zum Errichten der Windenergieanlage ein Turmdrehkran bereitgestellt wird, welcher innerhalb des durch die Eckpunkte der Eckstiele aufgespannten Grundfläche positioniert und aufgebaut wird, kann ein schnelles und materialreduziertes Gesamtkonzept für die wirtschaftliche und sichere Errichtung einer Windkraftenergieanlage für beliebige Nabenhöhen bereitgestellt werden, da die Positionierung und der Aufbau des Turmdrehkrans innerhalb der durch die Eckpunkte der Eckstiele aufgespannten Grundfläche und so zumindest bereichsweise das mindestens eine erstellte Fundament als Stellfläche und/oder Krafteinleitfläche oder -punkte nutzt. Dadurch können zusätzliche erforderliche Baumaßnahmen eines zusätzlichen Fundamentes für einen (Turmdreh-)Kran bzw. "crane pads" entfallen und/oder die Verwendung von sonstigen schweren Kranen vermieden werden.

Die Dimensionierung der Gitterstruktur wird je nach technischen Anforderungen, insbesondere abhängig von der zu erstellenden Höhe des Turms und/oder Leistung der Turbine, mit einer definierten Grundfläche ausgelegt, welche bei einer Gitterstruktur mit beispielsweise drei Eckstielen einem gleichseitigen Dreieck entsprechen kann. Durch die Positionierung und Aufbau des Turmdrehkrans innerhalb der durch die unteren Enden der Eckstiele aufgespannte Grundfläche und der nach oben im Winkel zueinander verlaufenden Eckstiele (Verjüngung des Querschnitts in der Vertikalen der Gitterstruktur nach oben) können beim Heben und der Montage des oberen Zylinders oder Segmente zur Erstellung des oberen Zylinders, der Gondel oder Teile zur Erstellung der Gondel und weiteren Komponenten wie zum Beispiel Turbine, Rotorblätter etc., große Biegemomente in den Boden über das Fundament oder über die lokalen Fundamente der mit diesen verbundenen Gitterstruktur abgeleitet werden, so dass ein großer Hebelarm bereitgestellt werden kann. Bei herkömmlichen Kranen wird bzw. muss dieser (fehlende) Hebelarm durch entsprechend hohe Gegengewichte ausgeglichen werden.

Ein weiterer Vorteil der Positionierung und des Aufbaus des Turmdrehkrans innerhalb der durch die unteren Enden der Eckstiele aufgespannten Grundfläche ist, dass der Turmdrehkran in seiner vertikalen Arbeitsposition sehr nah parallel am (zu errichtenden) oberen Zylinder verläuft, so dass Windkraftanlagen auch bei hohen Windgeschwindigkeiten errichtet werden können, da diese im Vergleich zu Standardkranen bzw. Raupenkranen, die konventionell weiter beabstandet vom oberen Zylinder agieren, eine deutlich geringere Wind- und Wetteranfälligkeit aufweisen. Insbesondere kann dadurch auch ein schnelles und sicheres Errichten von Windkraftanlagen respektive von ganzen Windparks mit einer deutlich verbesserten zeitlichen Planbarkeit ermöglicht werden.

Die Gitterstruktur ist für die Lasten aus Wind, Rotorblätter und Turbine ausreichend dimensioniert.

Zumindest das Heben und Montieren/Befestigen des Übergangs, des oberen Zylinders und der Gondel, sowie weiteren Komponenten wie zum Beispiel der Turbine und der Rotorblätter, erfolgt erfindungsgemäß über den innerhalb der durch die unteren Enden der Eckstiele aufgespannten Grundfläche positionierten und aufgebauten Turmdrehkran.

Weitere vorteilhafte Ausgestaltungen und Weiterbildungen gehen aus der nachfolgenden Beschreibung hervor. Ein oder mehrere Merkmale aus den Ansprüchen, der Beschreibung wie auch der Zeichnung können mit einem oder mehreren anderen Merkmalen daraus zu weiteren Ausgestaltungen der Erfindung verknüpft werden. Es können auch ein oder mehrere Merkmale aus den unabhängigen Ansprüchen durch ein oder mehrere andere Merkmale verknüpft werden.

Gemäß einer Ausgestaltung des erfindungsgemäßen Verfahrens wird das Fundament vollständig innerhalb der aufgespannten Grundfläche erstellt, wobei eine Anbindung des Turmdrehkrans lösbar mit dem Fundament erfolgt. Da das Fundament sich vollständig über die aufgespannte Grundfläche erstreckt, umfasst das Fundament auch die Bereiche zur Aufnahme der unteren Enden der Eckstiele, so dass eine Verbindung der Eckpunkte über das Fundament ermöglicht wird, und dadurch die eingeleiteten Lasten über eine größere Fläche in den Boden eingeleitet werden können. Die lösbare Anbindung des Turmdrehkrans mit dem Fundament nutzt in gleicher Art und Weise das Ableiten der Lasten während des Errichtens der Windenergieanlage über das großflächig und vollständig innerhalb der aufgespannten Grundfläche sich erstreckende Fundament.

Gemäß einer Ausgestaltung des erfindungsgemäßen Verfahrens werden Lehren bereitgestellt, über welche eine Anbindung des Turmdrehkrans lösbar erfolgt. Die Lehren dienen der sicheren Aufnahme des Krans während der Errichtungsphase und können aus offenen in Teilbereichen verstärkten Profilen, insbesondere aus Stahl, bestehen, die vorzugsweise lösbar untereinander und an der Gitterstruktur mittels Schrauben, Klammern und/oder Schellen befestigt werden. Die Position der Befestigungspunkte an die Unterkonstruktion/Gitterstruktur ist variabel und hängt von dem verwendeten Turmdrehkran und dessen Abmessungen am Fußpunkt ab. Die Lehren werden bevorzugt für die jeweilige Leistungsklasse der Turbine zuvor statisch entsprechend ausgelegt.

Gemäß einer Ausgestaltung des erfindungsgemäßen Verfahrens wird der Turmdrehkran über mindestens einen Stützarm, welcher am Turmdrehkran angeordnet ist, an einem bereits montierten Bereich des Turms abgestützt und/oder mit diesem verbunden. Dies verleiht dem Turmdrehkran eine ausreichende Stabilität. Bevorzugt erfolgt ein Heben und/oder Senken der Lasten derart, dass der Ausleger des Drehturmkrans in Draufsicht (Ansicht von oben) den Mittelpunkt des zu erstellenden Turms schneidet. Dadurch lassen sich in Verbindung mit der Abstützung an einem bereits montierten Bereich des Turms über mindestens einen Stützarm höhere Biegemomente umsetzen, da die Abstützung radial zum Mittelpunkt des Turms respektive zum bereits montierten Bereich des Turms wirkt. Vorzugsweise wird der Turmdrehkran über mindestens zwei Stützarme an bereits montierten Bereichen des Turms abgestützt und/oder mit diesen verbunden. Bevorzugt erfolgt eine (erste) Abstützung im Bereich des Übergangs. Alternativ oder zusätzlich kann eine (weitere) Abstützung am montierten Bereich des oberen Zylinders erfolgen.

Gemäß einer Ausgestaltung des erfindungsgemäßen Verfahrens kann der Turmdrehkran mit zunehmender Höhe des Turms insbesondere sukzessive über zusätzliche Segmente in seiner Höhe vergrößert werden. Durch Einschieben von weiteren Zwischenelementen kann der Mast des Turmdrehkrans quasi "mitwachsen" und somit kann vorzugsweise immer in der optimalen Höhe gearbeitet werden.

### Kurze Beschreibung der Zeichnungen (Brief Description of Drawings)

Im Folgenden wird die Erfindung anhand von Zeichnungen näher erläutert. Gleiche Teile sind mit gleichen Bezugszeichen versehen. Im Einzelnen zeigen:
- **Fig. 1**: eine schematische Darstellung in Draufsicht zum Zeitpunkt des Errichtens einer Windenergieanlage und
- **Fig. 2**: eine schematische Darstellung zum Zeitpunkt des Errichtens einer Windenergieanlage.

### Beschreibung der bevorzugten Ausführungsformen (Best Mode for Carrying out the Invention)

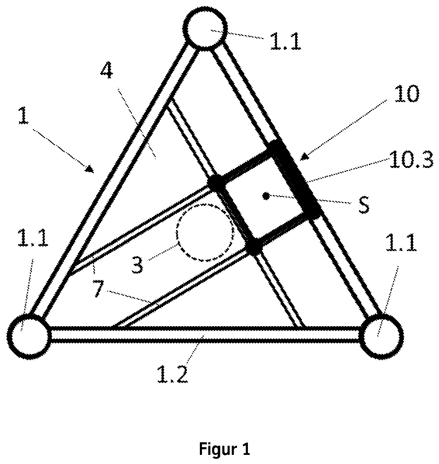

**Figur 1** zeigt eine schematische Darstellung in Draufsicht zum Zeitpunkt des Errichtens einer nicht dargestellten Windenergieanlage. Vor dem Errichten der nicht dargestellten Windenergieanlage, insbesondere vor dem Errichten der Gitterstruktur (1), wird zumindest bereichsweise mindestens ein Fundament (4) zur Aufnahme der unteren Enden der Eckstiele (1.1) erstellt. Das Fundament kann entweder (nur) lokal in den Bereichen der Aufnahme (4.1) der unteren Enden der Eckstiele (1.1) erstellt werden, wobei die lokalen Bereiche nicht miteinander verbunden sind, oder alternativ kann ein Fundament (4) erstellt werden, welches nicht nur die Bereiche zur Aufnahme (4.1) der unteren Enden der Eckstiele (1.1), sondern auch die aufgespannte Grundfläche zwischen den Eckpunkten umfasst und somit eine Verbindung aller Eckpunkte über das Fundament (4) ermöglicht.

Das erstellte Fundament (4) ist nicht auf die aufgespannte Grundfläche der Eckpunkte beschränkt, sondern kann auch darüber hinaus oder bei Bedarf kleiner als die aufgespannte Grundfläche ausgeführt werden.

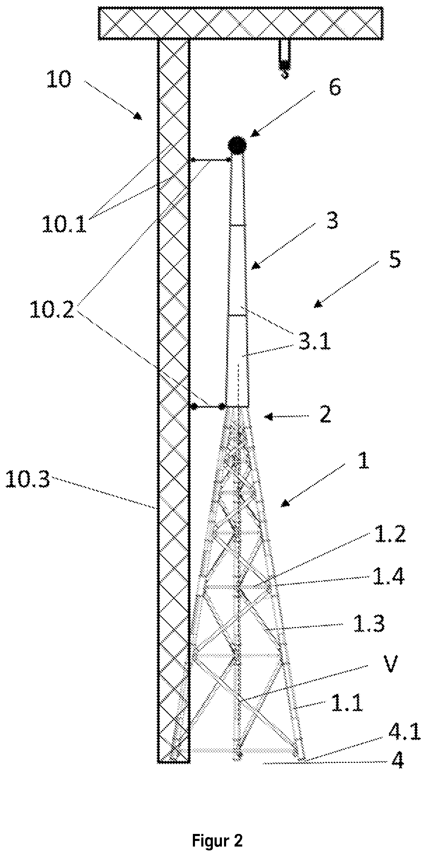

Zum Errichten der nicht dargestellten Windenergieanlage wird ein Turmdrehkran (10) bereitgestellt, welcher innerhalb des durch die Eckpunkte der Eckstiele (1.1) aufgespannten Grundfläche positioniert und aufgebaut wird. Der Turmdrehkran (10) umfasst einen Mast (10.3), beispielsweise einen Gittermast, welcher vorzugsweise aus mehreren Segmenten (10.1) zusammengesetzt sein kann, vgl. **Figur 2****.** Am unteren Ende, dem Fußende, des Turmdrehkrans (10) kann der Turmdrehkran (10) lösbar mit dem Fundament (4) angebunden werden, hier nicht dargestellt. Alternativ können Lehren (7) bereitgestellt werden, welche vorzugsweise lösbar untereinander und an der Gitterstruktur (1) mittels Schrauben, Klammern und/oder Schellen befestigt werden. Sie dienen zur sicheren Aufnahme des Turmdrehkrans (10), über welche am unteren Ende, dem Fußende, des Turmdrehkrans (10) der Turmdrehkran (10) lösbar angebunden werden kann. Am oberen Ende, dem Kopfende, des Turmdrehkrans (10) ist ein Drehkranz angeordnet, auf welchem ein Ausleger drehbar montiert ist. Entlang des Auslegers läuft insbesondere eine Laufkatze mit Hebemitteln, über welche Lasten heb- und senkbar sind. Bei Bedarf kann der Turmdrehkran (10) auch einen Gegenausleger optional mit (Gegen-)Gewicht(en) aufweisen, welcher in entgegengesetzter Richtung zur Ausrichtung des Auslegers verläuft. Der Turmdrehkran (10) wird innerhalb des durch die Eckpunkte der Eckstiele (1.1) aufgespannten Grundfläche positioniert und aufgebaut.

Unter Positionierung und Aufbau des Turmdrehkrans (10) innerhalb der durch die Eckpunkte der Eckstiele (1.1) aufgespannten Grundfläche muss sich insbesondere nicht notwendig das Fußende des Turmdrehkrans (10) vollständig innerhalb der aufgespannten Grundfläche befinden, sondern es reicht aus, wenn sich vorzugsweise der Schwerpunkt (S) des Turmdrehkrans (10), welcher beispielswiese der Achse des (Gitter-)Mastes (10.3) entspricht, innerhalb der aufgespannten Grundfläche befindet.

Die Gitterstruktur (1) kann aus mehreren Teilen (1.1, 1.2, 1.3, 1.4) entweder "liegend" zusammengebaut und anschließend mittels Turmdrehkran (10) aufgerichtet werden oder "stehend" in die Höhe, unter Verwendung des Turmdrehkrans (10), aufgebaut werden, oder eine Kombination aus "liegender" und "stehender" Montage unter Verwendung des Turmdrehkrans (10). Am unteren Endes der Gitterstruktur (1) respektive an den unteren Enden der Eckstiele (1.1) der Gitterstruktur (1) ist ein Fundament (4) oder mehrere lokale Fundamente, hier nicht dargestellt, erstellt worden, welche insbesondere Mittel (4.1) aufweisen, die zur Aufnahme und/oder Anbindung des unteren Endes der Gitterstruktur (1) respektive der unteren Enden der Eckstiele (1.1) der Gitterstruktur (1) dienen.

Die Gitterstruktur (1) für einen Turm (5) einer nicht dargestellten Windenergieanlage umfasst mindestens drei Eckstiele (1.1), welche in einem Winkel zur Vertikalen (V) der Gitterstruktur (1) zueinander geneigt sind, wobei die Eckstiele (1.1) im unteren Teil der Gitterstruktur (1) weiter voneinander beabstandet sind als im oberen Teil der Gitterstruktur (1), wobei jeder Eckstiel (1.1) aus mehreren Längsstreben zusammengesetzt ist. Des Weiteren umfasst die Gitterstruktur mindestens eine Querstrebe, vorzugsweise mehrere Querstreben (1.2), welche in einer horizontalen Ebene der Gitterstruktur (1) jeweils zwischen zwei Eckstielen (1.1) angeordnet und mit diesen verbunden sind. Des Weiteren umfasst die Gitterstruktur (1) mindestens eine Diagonalstrebe, vorzugsweise mehrere Diagonalstreben (1.3), welche zwischen zwei horizontalen Ebenen der Gitterstruktur (1) jeweils zwischen zwei Eckstielen (1.1) angeordnet und mit diesen verbunden sind. Ferner umfasst die Gitterstruktur (1) mindestens drei Knoten, vorzugsweise mehrere Knoten (1.4), welche in mindestens einer horizontalen Ebene der Gitterstruktur (1) jeweils zwischen den die Eckstiele (1.1) bildenden Längsstreben angeordnet sind und jeweils als Verbindungselement zwischen zwei Längsstreben, der mindestens einen Querstrebe (1.2) und der mindestens einen Diagonalstrebe (1.3) fungieren.

Die Figur 2 zeigt in einer schematischen Darstellung den Zeitpunkt nach Montage einer Gondel (6) auf einem Turm (5) einer nicht dargestellten Windenergieanlage. Der Turmdrehkran (10) wird über mindestens einen Stützarm (10.2), welcher am Turmdrehkran (10) angeordnet ist, an einem bereits montierten Bereich des Turms (5) abgestützt und/oder mit diesem verbunden. Bevorzugt erfolgt eine (erste) Abstützung im Bereich des Übergangs (2). Alternativ oder zusätzlich kann eine (weitere) Abstützung am montierten Bereich des oberen Zylinders (3) erfolgen. Insbesondere ist der obere Zylinder (3), welcher auf dem Übergang (2) montiert und befestigt werden soll, aus mehreren einzelnen Segmenten (3.1) zusammengesetzt, welche jeweils einzeln über den Turmdrehkran (10) gehoben und anschließend jeweils montiert und (miteinander) befestigt werden. Mit zunehmender Höhe des Turms (5) kann insbesondere sukzessive über zusätzliche Segmente der Turmdrehkran (10) in seiner Höhe vergrößert werden, so dass durch Einfügen von weiteren Zwischenelementen (10.1) der Mast (10.3) des Turmdrehkrans (10) "mitwachsen" und somit vorzugsweise immer in der optimalen Höhe gearbeitet werden kann.

Die Gondel (6) wird mittels Turmdrehkran (10) in Teilen oder als Ganzes auf den oberen Zylinder (3) gehoben und anschließend montiert und befestigt. Weitere nicht dargestellte Komponenten wie zum Beispiel Turbine und Rotorblätter werden ebenfalls mittels Turmdrehkran (10) insbesondere zur Komplettierung der nicht dargestellten Windenergieanlage gehoben und entsprechend ihrer Arbeitsposition montiert und befestigt.

Nach dem Erstellen der nicht dargestellten Windenergieanlage wird der Turmdrehkran (10) wieder abgebaut.

Der Turm (5) einer nicht dargestellten Windenergieanlage ist bevorzugt für den Onshore-Bereich ausgelegt.

Die beschriebenen Merkmale sind alle, soweit technisch möglich, miteinander kombinierbar.

## Patentansprüche

1. Verfahren zum Errichten einer Windenergieanlage, umfassend einen Turm (5) und eine auf dem Turm (5) drehbar angeordnete Gondel (6), wobei der Turm (5) eine untere Gitterstruktur (1), einen Übergang (2) und einen oberen Zylinder (3) umfasst, wobei der Übergang (2) den oberen Zylinder (3) mit der Gitterstruktur (1) verbindet, wobei die Gitterstruktur (1) mindestens drei Eckstiele (1.1) umfasst, welche in einem Winkel zur Vertikalen (V) der Gitterstruktur (1) zueinander geneigt sind und an ihren unteren Enden zur Vertikalen (V) Eckpunkte definieren, welche eine Grundfläche aufspannen, und die Gitterstruktur (1) Querstreben (1.2) und/oder Diagonalstreben (1.3) aufweist, wobei zunächst die Gitterstruktur (1), auf die Gitterstruktur (1) der Übergang (2), auf dem Übergang (2) der Zylinder (3) und auf dem Zylinder (3) die Gondel (6) nacheinander montiert werden, wobei vor dem Errichten der Windenergieanlage zumindest bereichsweise mindestens ein Fundament (4) zur Aufnahme der unteren Enden der Eckstiele (1.1) erstellt wird, **dadurch gekennzeichnet, dass** zum Errichten der Windenergieanlage ein Turmdrehkran (10) bereitgestellt wird, welcher innerhalb des durch die Eckpunkte der Eckstiele (1.1) aufgespannten Grundfläche positioniert und aufgebaut wird.

2. Verfahren nach Anspruch 1, wobei das Fundament (4) vollständig innerhalb der aufgespannten Grundfläche erstellt wird, wobei eine Anbindung des Turmdrehkrans (10) lösbar mit dem Fundament (4) erfolgt.

3. Verfahren nach Anspruch 1, wobei Lehren (7) bereitgestellt werden, über welche eine Anbindung des Turmdrehkrans (10) lösbar erfolgt.

4. Verfahren nach einem der vorgenannten Ansprüche, wobei der Turmdrehkran (10) über mindestens einen Stützarm (10.2), welcher am Turmdrehkran (10) angeordnet ist, an einem bereits montierten Bereich des Turms (5) abgestützt und/oder verbunden wird.

5. Verfahren nach einem der vorgenannten Ansprüche, wobei der Turmdrehkran (10) mit zunehmender Höhe des Turms (5) insbesondere sukzessive über zusätzliche Segmente in seiner Höhe vergrößert werden kann.

## Claims

1. A method for erecting a wind turbine comprising a tower (5) and a nacelle (6) rotatably arranged on the tower (5), wherein the tower (5) comprises a lower lattice structure (1), a transition (2) and an upper cylinder (3), wherein the transition (2) connects the upper cylinder (3) to the lattice structure (1), the lattice structure (1) comprising at least three corner posts (1.1) which are inclined at an angle to the vertical (V) of the lattice structure (1) relative to one another and define corner points at their lower ends relative to the vertical (V), which corner points span a base area, and the lattice structure (1) having cross struts (1.2) and/or diagonal struts (1.3), wherein the lattice structure (1), the transition (2) on the lattice structure (1), the cylinder (3) on the transition (2) and the nacelle (6) on the cylinder (3) are successively mounted, wherein at least one foundation (4) for receiving the lower ends of the corner posts (1.1) is constructed at least in some areas before the wind turbine is erected, **characterized in that** that a tower slewing crane (10) is provided for erecting the wind turbine, which is positioned and erected within the base area spanned by the corner points of the corner posts (1.1).

2. A method according to claim 1, wherein the foundation (4) is constructed entirely within the defined base area, wherein the tower slewing crane (10) is detachably connected to the foundation (4).

3. A method according to claim 1, wherein gauges (7) are provided, via which the tower slewing crane (10) is detachably connected.

4. A method according to any one of the preceding claims, wherein the tower slewing crane (10) is supported on and/or connected to an already assembled region of the tower (5) by way of at least one supporting arm (10.2) which is arranged on the tower slewing crane (10).

5. A method according to one of the above claims, wherein the tower slewing crane (10) can be increased in height as the tower (5) increases in height, in particular, successively by means of additional segments.

## Revendications

1. Procédé d'érection d'une éolienne comprenant une tour (5) et une nacelle (6) disposée de manière rotative sur la tour (5), dans lequel la tour (5) comprend une structure en treillis inférieure (1), une transition (2) et un cylindre supérieur (3), dans lequel la transition (2) relie le cylindre supérieur (3) à la structure en treillis (1), la structure en treillis (1) comprenant au moins trois poteaux d'angle (1.1) qui sont inclinés à un angle par rapport à la verticale (V) de la structure en treillis (1) l'un par rapport à l'autre et définissent des points d'angle à leurs extrémités inférieures par rapport à la verticale (V), ces points d'angle couvrant une zone de base, et la structure en treillis (1) ayant des entretoises transversales (1.2) et/ou des entretoises diagonales (1.3), dans laquelle la structure en treillis (1), la transition (2) sur la structure en treillis (1), le cylindre (3) sur la transition (2) et la nacelle (6) sur le cylindre (3) sont montés successivement, dans laquelle au moins une fondation (4) destinée à recevoir les extrémités inférieures des poteaux d'angle (1.1) est construite au moins dans certaines zones avant que l'éolienne ne soit érigée, **caractérisée par le fait qu'**une grue pivotante à tour (10) est fournie pour ériger l'éolienne, qui est positionnée et érigée dans la zone de base couverte par les points d'angle des poteaux d'angle (1.1).

2. Procédé selon la revendication 1, dans laquelle la fondation (4) est construite entièrement dans la zone de base définie, la grue pivotante à tour (10) étant reliée de manière amovible à la fondation (4).

3. Procédé selon la revendication 1, dans laquelle des jauges (7) sont fournies, par lesquelles la grue pivotante à tour (10) est connectée de manière amovible.

4. Procédé selon l'une quelconque des revendications précédentes, dans lequel la grue pivotante (10) est soutenue et/ou reliée à une zone déjà assemblée de la tour (5) au moyen d'au moins un bras porteur (10.2) disposé sur la grue pivotante (10).

5. Procédé selon l'une des revendications précédentes, dans lequel la grue pivotante à tour (10) peut être augmentée en hauteur au fur et à mesure de l'augmentation de la hauteur de la tour (5), en particulier, successivement, au moyen de segments supplémentaires.
